# EUROPEAN PATENT APPLICATION

(11) **EP 4 145 925 A1**
(43) Date of publication of application: **08.03.2023**
(21) Application number: 20932970.5
(22) Date of filing: 30.04.2020
(51) Int. Cl.: H04W 72/02

(54) **MULTI-CARRIER COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: XING, Jinqiang, Dongguan, Guangdong 523860 (CN)
(74) Representative: Ipside
(86) International application number: PCT/CN2020/088520
(87) International publication number: WO 2021/217668

(57) **Abstract**

The present disclosure relates to a multi-carrier communication method, a terminal device, and a network device. The multi-carrier communication method comprises: a terminal device sending multi-carrier communication capability information to a network device, the multi-carrier communication capability information indicating the network device to configure multi-carrier communication for the terminal device. In an embodiment of the present invention, multi-carrier communication capability information sent to a network device by a terminal device assists the network device in configuring multi-carrier communication for the terminal device, thereby reducing multi-carrier communication failures, and enabling the terminal device to successfully perform multi-carrier communication.

## Description

### TECHNICAL FIELD

The present disclosure relates to a field of communications, and in particular to a multi-carrier communication method, a terminal device, and a network device.

### BACKGROUND

In a communication system, a Carrier Aggregation (CA) or a Dual Connectivity (DC) is a typical multi-carrier communication. Usually, a terminal may first access a single-carrier cell. Then a base station may configure other uplink carriers or downlink carriers to the terminal and a multi-carrier communication may be formed. In a 4G system, an operating frequency band may be generally lower (less than 6GHz). Usually, no problem may exist in operations of the multi-carrier communication mentioned above. The terminal may adopt a few of omnidirectional radiating antennas to transmit data or receive data. A manner of the base station adding a carrier may be simpler. Carriers may be added or deleted as required.

In a 5G NR system, a millimeter-wave operating frequency band is introduced. An operating frequency of a millimeter wave may reach a value more than 10GHz. A 5G NR terminal may operate in a millimeter-wave frequency band, which may be prone to a problem of a failure in a multi-carrier configuration.

### SUMMARY OF THE DISCLOSURE

A multi-carrier communication method, a terminal device, and a network device are provided, such that a possibility of the failure in the multi-carrier configuration may be reduced.

A first multi-carrier communication method is provided and includes sending, by a terminal device, multi-carrier communication capability information to a network device, and the multi-carrier communication capability information being configured to indicate the network device to perform a multi-carrier communication configuration for the terminal device.

A second multi-carrier communication method is provided and includes sending, by a terminal device, a request for adjusting a multi-carrier communication configuration to a network device, and the request for adjusting the multi-carrier communication configuration being configured to request the network device to adjust the multi-carrier communication configuration of the terminal device.

A third multi-carrier communication method is provided and includes receiving, by a network device, multi-carrier communication capability information from a terminal device; and performing a multi-carrier communication configuration for the terminal device based on the multi-carrier communication capability information.

A fourth multi-carrier communication method is provided and includes receiving, by a network device, a request for adjusting a multi-carrier communication configuration; and adjusting, by a network device, the multi-carrier communication configuration of the terminal device based on the request for adjusting the multi-carrier communication configuration.

A first terminal device is provided and includes a first sending unit configured to send multi-carrier communication capability information to a network device, and the multi-carrier communication capability information being configured to indicate the network device to perform a multi-carrier communication configuration for the terminal device.

A second terminal device is provided and includes a sending unit configured to send a request for adjusting a multi-carrier communication configuration to a network device, and the request for adjusting the multi-carrier communication configuration being configured to request the network device to adjust the multi-carrier communication configuration of the terminal device.

A first network device is provided and includes a first receiving unit configured to receive multi-carrier communication capability information from a terminal device; and a configuring unit configured to perform a multi-carrier communication configuration for the terminal device based on the multi-carrier communication capability information.

A second network device is provided and includes a receiving unit configured to receive a request for adjusting a multi-carrier communication configuration; and a configuration adjusting unit configured to adjust the multi-carrier communication configuration of the terminal device based on the request for adjusting the multi-carrier communication configuration.

A third terminal device is provided and includes a processor; and a memory configured to store a computer program, the processor being configured to call and run the computer program stored in the memory and implement the multi-carrier communication method described above.

A third network device is provided and includes a processor; and a memory configured to store a computer program, the processor being configured to call and run the computer program stored in the memory and implement the multi-carrier communication method described above.

A chip is provided and configured to implement the multi-carrier communication method described above. The chip includes a processor configured to call a computer program from a memory and run the computer program, such that a device installed with the chip implements the multi-carrier communication method described above.
A computer-readable storage medium is provided and configured to store a computer program, and the computer program causes a computer to implement the multi-carrier communication method described above.
A computer-program product is provided and includes computer-program indications, and the computer-program indications cause a computer to implement the multi-carrier communication method described above.
A computer program is provided and causes a computer to implement the multi-carrier communication method described above when the computer program is run on the computer.

In the embodiments of the present disclosure, the multi-carrier communication capability information is sent to the network device by the terminal device. In this way, the network device may be assisted to perform a multi-carrier communication configuration for the terminal device, such that the possibility of the failure in the multi-carrier communication may be reduced and the terminal may succeed in performing the multi-carrier communication.

### BRIEF DESCRIPTION OF THE DRAWINGS

FIG. 1 is a schematic diagram of an application scenario according to some embodiments of the present disclosure.
FIG. 2 is a schematic diagram of a multi-carrier communication.
FIG. 3 is a schematic diagram of a beam-based communication manner of a terminal in a millimeter-wave frequency band.
FIG. 4 is a schematic diagram of a 5G millimeter-wave frequency band.
FIG. 5 is a schematic diagram of a power spectral density power spectral density of the 5G millimeter-wave frequency band.
FIG. 6 is a schematic flowchart of a multi-carrier communication method according to a first embodiment of the present disclosure.
FIG. 7 is a schematic flowchart of the multi-carrier communication method according to a second embodiment of the present disclosure.
FIG. 8 is a schematic flowchart of the multi-carrier communication method according to a third embodiment of the present disclosure.
FIG. 9 is a schematic flowchart of the multi-carrier communication method according to a fourth embodiment of the present disclosure.
FIG. 10 is a schematic diagram of a multi-carrier communication performed by base stations not sharing a common site.
FIG. 11a to FIG. 11c are schematic diagrams of beamforming capabilities of a terminal.
FIG. 12a to FIG. 12b are schematic diagrams of a capability of the maximum difference in a power spectral density between carriers which may be demodulated by the terminal.
FIG. 13 is a schematic flowchart of reporting the capability of the maximum difference in the power spectral density between the carriers according to some embodiments of the present disclosure.
FIG. 14 is a schematic flowchart of requesting adjusting a difference in the power spectral density between the carriers according to some embodiments of the present disclosure.
FIG. 15 is a schematic block diagram of a terminal device according to a first embodiment of the present disclosure.
FIG. 16 is a schematic block diagram of the terminal device according to a second embodiment of the present disclosure.
FIG. 17 is a schematic block diagram of the terminal device according to a third embodiment of the present disclosure.
FIG. 18 is a schematic block diagram of the terminal device according to a fourth embodiment of the present disclosure.
FIG. 19 is a schematic block diagram of a network device according to a first embodiment of the present disclosure.
FIG. 20 is a schematic block diagram of the network device according to a second embodiment of the present disclosure.
FIG. 21 is a schematic block diagram of the network device according to a third embodiment of the present disclosure.
FIG. 22 is a schematic block diagram of the network device according to a fourth embodiment of the present disclosure.
FIG. 23 is a schematic block diagram of a communication device according to some embodiments of the present disclosure.
FIG. 24 is a schematic block diagram of a chip according to some embodiments of the present disclosure.
FIG. 25 is a schematic block diagram of a communication system according to some embodiments of the present disclosure.

### DETAILED DESCRIPTION

Technical solutions in the embodiments of the present disclosure will be described in the following with reference to accompanying drawings in the embodiments of the present disclosure.

The technical solutions of the embodiments of the present disclosure may be applied to various communication systems, for example, a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system , a New Radio (NR) system, an evolution system of the NR system, a LTE-based access to unlicensed spectrum (LTE-U), a NR-based access to unlicensed spectrum (NR-U) system, a Universal Mobile Telecommunication System (UMTS), a Wireless Local Area Networks (WLAN), a Wireless Fidelity (WiFi), a 5th-Generation (5G) system, or other communication systems, etc.

In general, connections supported by a traditional communication system have a limited number and are easy to achieve. However, with a communication technology developing, a mobile communication system may not only support traditional communications, but also support, for example, a Device to Device (D2D) communication, a Machine to Machine (M2M) communication, a Machine Type Communication (MTC), and a Vehicle to Vehicle (V2V) communication, etc. The embodiments of the present disclosure may also be applied to these communication systems.

In some embodiments, the communication system in the embodiments of the present disclosure may be applied to a CA (Carrier Aggregation,) scenario, a DC (Dual Connectivity) scenario, or a SA (Standalone) network-deploying scenario.

A spectrum applied is not limited in the embodiments of the present disclosure. For example, the embodiments of the present disclosure may be applied to a licensed spectrum, or be applied to the unlicensed spectrum.

Various embodiments are described in the embodiments of present disclosure in conjunction with a network device and a terminal device. The terminal device may also be referred to as a User Equipment (UE), an access terminal, a user unit, a user station, a mobile station, a mobile platform, a remote station, a remote terminal, a mobile device, a user terminal, a terminal, a wireless communication device, a user agent, or a user device, etc. The terminal device may be a STAION (ST) in the WLAN, a cellular phone, a cordless phone, a Session Initiation Protocol (SIP) phone, a Wireless Local Loop (WLL) station, a Personal Digital Assistant (PDA) device, a handheld device having wireless communication functions, a computing device, or other processing devices connected to a wireless modem, an in-vehicle device, a wearable device, and a next-generation communication system, for example, the terminal device in a NR network or the terminal device in an evolving-in-future Public Land Mobile Network (PLMN).

For an example but not a limitation, in the embodiments of the present disclosure, the terminal device may also be the wearable device. The wearable device may also be referred to as a wearable smart device, which is a general term for the wearable device developed through performing an intelligent design for a daily wear by adopting a wearable technology, such as glasses, gloves, watches, clothing, and shoes. The wearable device is a portable device which is worn directly on a body or integrated into the clothing or accessories of the user. The wearable device is not only a hardware device, but also implement powerful functions through a software support, a data interaction, and a cloud interaction. The wearable smart device in a broad sense may include devices which have complete functions and a large size, and may implement full or a part of the functions without relying on a smart phone, such as smart watches or smart glasses; and devices which may only focus on a certain type of application function and are required to be used cooperating with other devices such as smart phones, for example, all kinds of smart bracelets, smart jewelry, etc. for physical body-sign monitoring.

In the embodiments of the present disclosure, the network device may be a device configured to communicate with the mobile device. The network device may be an AP (Access Point) and the GSM in the WLAN, or a BTS (Base Transceiver Station) in CDMA, or a NodeB (NB) in the WCDMA, or an eNB or eNodeB (Evolutional Node B) in the LTE, or a relay station, or the AP, or the in-vehicle device, the wearable device, and a gNB in the NR network, or the network device in the evolving-in-future PLMN, and the like.

In the embodiments of the present disclosure, the network device may provide services for a cell. The terminal device may communicate with the network device through transmission resources (for example, frequency domain resources, i.e., spectrum resources) used by the cell. The cell may be a cell corresponding to the network device (e.g., the base station). The cell may belong to a macro base station, or belong to a base station corresponding to a small cell. The small cell herein may include a Metro cell, a Micro cell, a Pico cell, a Femto cell, etc. These small cells have such characteristics of a small coverage and a low transmit power that the small cells are suitable for providing a high-speed data-transmission service.

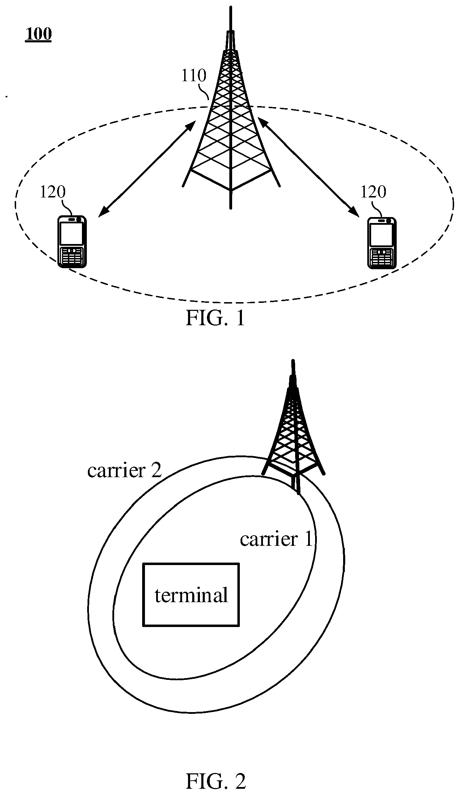

FIG. 1 exemplarily shows a communication system 100. The communication system 100 includes a network device 110 and two terminal devices 120. In some embodiments, the communication system 100 may include multiple network devices 110. A covering range of each network device 110 may include other numbers of terminal devices 120, which will not be limited in the embodiments of the present disclosure.

In some embodiments, the communication system 1000 may further include other network entities such as a Mobility Management Entity (MME), an Access and Mobility Management Function (AMF), and the like, which will not be limited in the embodiments of the present disclosure.

It should be understood that the term "system" and the term "network" may be often used interchangeably herein. The term "and/or" herein is simply configured to describe an association relationship of associated objects, indicating three relationships may exist. For example, A and/or B, may mean three cases that A exists alone, A and B exist simultaneously, and B exists alone. In addition, a character "j" herein generally indicates a "or" relationship between an object before the character "/" and a related object behind the character "j".

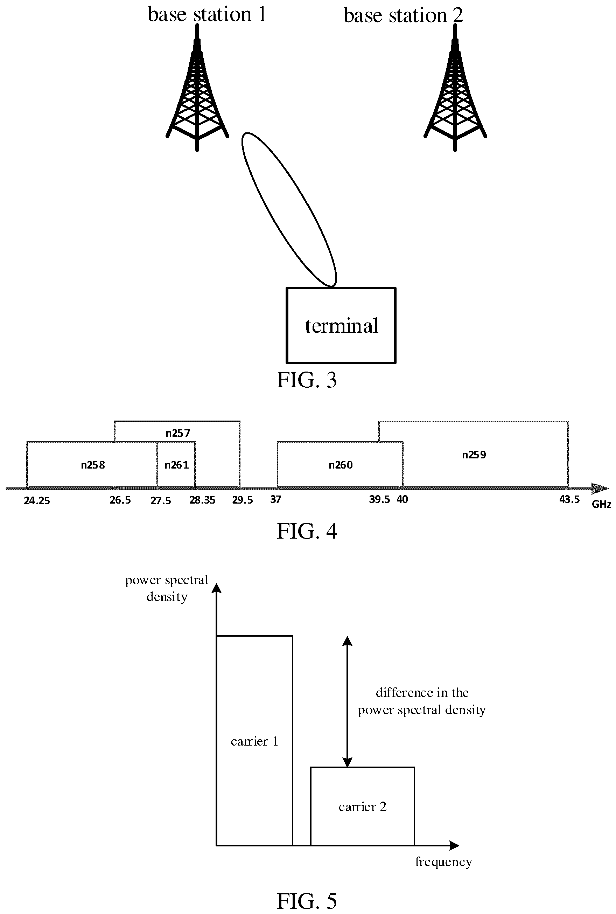

As shown in FIG. 2, an example of the multi-carrier communication is provided. In a multi-carrier operating manner of a 4G terminal, a carrier 1 and a carrier 2 may be the same frequency band or different frequency bands. In the 5G NR system, a terminal operating in the millimeter-wave frequency band may generally adopt narrow beams formed by an antenna array including multiple antenna elements to transmit a signal or receive the signal. In addition, these narrow beams may actually have stronger directivity, as shown in FIG. 3. FIG. 3 is a schematic diagram of a beam-based communication manner of a terminal in a millimeter-wave frequency band. In this case where a base station 2 which does not share a common site with a base station 1 configures another carrier to the terminal, the terminal may not receive or transmit the signal on the carrier, which may result in a carrier configuring failure.

In addition, differences among frequencies of millimeter-wave frequency bands are significantly large, such as a case of the 5G millimeter-wave frequency band shown in FIG. 4. In this way, differences among space transmitting losses of different frequency bands, or differences among space transmitting losses of different carriers in the same frequency band may be large. Further, differences in power spectral densities of signals of carriers having different frequencies may be large at a receiving terminal, such as a case of the power spectral densities of 5G millimeter-wave frequency bands in FIG. 5. Take a downlink signal as an example, when a signal at a transmitting terminal has a same strength, large differences may exist among strengths of signals received in a UE side (e.g., being more than 20 dB). In this case, when two receiving signals are amplified simultaneously by a Low Noise Amplification (LNA) inside the terminal, a stronger signal may interfere a weaker signal, such that the weaker signal may not be accurately received, which may further cause a failure of multiple carriers operating simultaneously.

Therefore, a multi-carrier communication method is provided in some embodiments of the present disclosure. In this way, a problem which may be faced by the 5G NR terminal operating in the millimeter-wave frequency band and being configured with the multiple carriers may be solved.

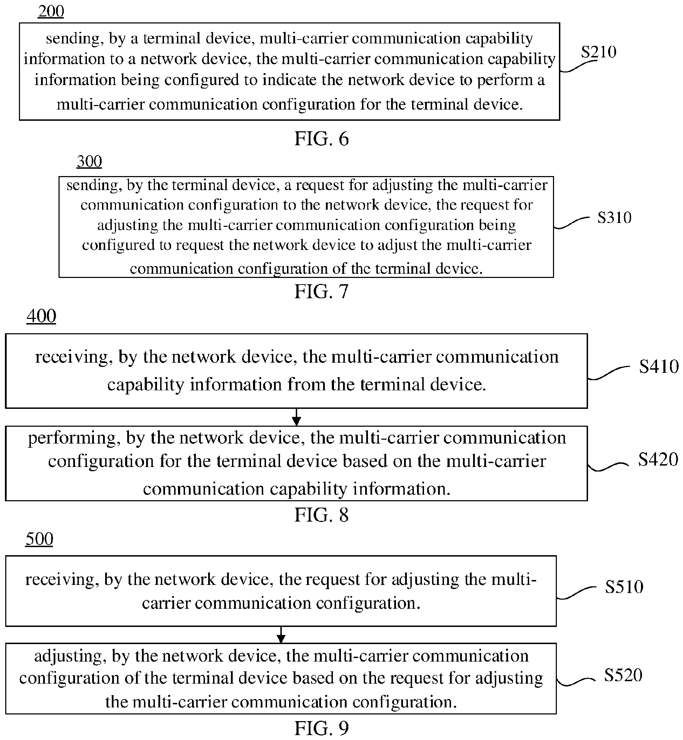

FIG. 6 is a schematic flowchart of a multi-carrier communication method 200 according to a first embodiment of the present disclosure. The method may be applied to a system as shown in FIG. 1, but is not limited thereto. The method may include at least part of the following contents.

At block S210, sending, by a terminal device, multi-carrier communication capability information to a network device, the multi-carrier communication capability information being configured to indicate the network device to perform a multi-carrier communication configuration for the terminal device.

In some embodiments of the present disclosure, the multi-carrier communication capability information may include a multi-beamforming capability. A beamforming is preprocessing technology for a signal based on the antenna array, where a directional beam may be obtained by adjusting a weighting coefficient of each antenna element in the antenna array and an obvious array gain may further be obtained. The multi-beamforming capability indicates a capability of generating multiple directional beams. The terminal sending the multi-carrier communication capability information to the network device, which may assist the network device to perform the multi-carrier communication configuration for the terminal device. In this way, the terminal device may successfully perform the multi-carrier communication. For example, a possibility of a failure of the multi-carrier communication resulting from the terminal device not supporting a multi-carrier independent beamforming or differences among power spectral densities of carriers being over large, etc., may be reduced.

In some embodiments, the multi-beamforming capability may include whether the terminal device supports multiple independent beamforming capabilities. An independent beamforming capability indicates the terminal device may have a capability of generating two or more beams with independent directions.

In some embodiments, whether the terminal device supports the multiple the independent beamforming capabilities, may include at least one of the following scenarios.

Scenario 1, the terminal device supports multiple independent beamforming capabilities in a frequency band.

Scenario 2, the terminal device does not support the multiple independent beamforming capabilities in the frequency band.

For example, the terminal device may report a beamforming capability based on the frequency band. In reported information, when an identifier of the beamforming capability corresponding to a frequency band n is 1, it may be indicated the terminal device supports multiple independent beamforming capabilities in the frequency band n. When the identifier of the beamforming capability corresponding to the frequency band n is 0, it may be indicated the terminal device does not support the multiple independent beamforming capabilities in the frequency band n.

Scenario 3, the terminal device supports multiple independent beamforming capabilities in a frequency band group.

Scenario 4, the terminal device does not support the multiple independent beamforming capabilities in the frequency band group.

For example, the terminal device may report the beamforming capability based on the frequency band group. A frequency band n257, a frequency band n258, and a frequency band n261 belong to a frequency band group A and have similar beamforming capabilities. In the reported information, when an identifier of the beamforming capability corresponding to a frequency band group A is 1, it may be indicated the terminal device supports multiple independent beamforming capabilities in each frequency band of the frequency band group A. When the identifier of the beamforming capability corresponding to the frequency band group A is 0, it may be indicated the terminal device does not support the multiple independent beamforming capabilities in each frequency band of the frequency band group A. A signaling overhead may be reduced by the terminal device reporting the beamforming capability based on the frequency band group.

Scenario 5, the terminal device supports multiple independent beamforming capabilities in a frequency band combination.

Scenario 6, the terminal device does not support the multiple independent beamforming capabilities in the frequency band combination.

For example, the terminal device may report the beamforming capability based on the frequency band combination. The frequency band n257 and the frequency band n260 do not belong to a same frequency band group and have similar beamforming capabilities. The frequency band n257 and the frequency band n260 may be regarded as the frequency band combination. In the reported information, when an identifier of the beamforming capability corresponding to a frequency band combination is 1, it may be indicated the terminal device supports multiple independent beamforming capabilities in each frequency band of the frequency band combination. When the identifier of the beamforming capability corresponding to the frequency band combination is 0, it may be indicated the terminal device does not support the multiple independent beamforming capabilities in each frequency band of the frequency band combination. The signaling overhead may be reduced by the terminal device reporting the beamforming capability based on the frequency band combination.

Scenario 7, the terminal device supports multiple independent beamforming capabilities in a combination of frequency band groups.

Scenario 8, the terminal device does not support the plurality of independent beamforming capabilities in the combination of the frequency band groups.

For example, the terminal device may report the beamforming capability based on the combination of the frequency band groups. The frequency band n257, the frequency band n258, and the frequency band n261 belong to the frequency band group A and have similar beamforming capabilities. A frequency band n260 and a frequency band n259 belong to a frequency band group B and have similar beamforming capabilities. A combination of the frequency band groups may include the frequency band group A and the frequency band group B. The signaling overhead may be reduced by the terminal device reporting the beamforming capability based on the combination of the frequency band groups.

For example, the terminal device report multiple independent beamforming capabilities which support the frequency band group A and the frequency band group B. A combination including any frequency band in the frequency band group A and any frequency band in the frequency band group B may operate simultaneously at cells not sharing the common site. A reason is that the terminal device may generate two beams having independent directions, one of the two beams is directed to a base station in the frequency band group A, and the other of the two beams is directed to a base station in the frequency band group B. In the reported information, when the identifier of the beamforming capability corresponding to the frequency band group A is 1, it may be indicated the terminal device supports multiple independent beamforming capabilities in each frequency band of the frequency band group A. When the identifier of the beamforming capability corresponding to the frequency band group A is 0, it may be indicated the terminal device does not support the multiple independent beamforming capabilities in each frequency band of the frequency band group A.

After receiving whether the terminal device supports the multiple independent beamforming capabilities, the network device may configure the multi-carrier communication of the terminal device. When the terminal device supports the multiple independent beamforming capabilities, a single base station cell, multiple base station cells sharing the common site, or multiple base station cells not sharing the common site may correspondingly configure the terminal device to perform the multi-carrier communication in the frequency band, the multi-carrier communication in the frequency band group, the multi-carrier communication of the frequency band combination, and the multi-carrier communication of the combination of the frequency band groups based on the above scenarios. When the terminal device does not support the multiple independent beamforming capabilities, the single base station cell or the multiple base station cells sharing the common site may correspondingly configure the terminal device to perform the multi-carrier communication in the frequency band, the multi-carrier communication in the frequency band group, the multi-carrier communication of the frequency band combination, and the multi-carrier communication of the combination of the frequency band groups based on the above scenarios.

In some embodiments, the multi-beamforming capability may further include the number of independent beamforming carriers supported by the terminal device. After receiving the number of independent beamforming carriers supported by the terminal device, the network device may configure the number of the carriers transmitted by base stations not sharing the common site based on the number of independent beamforming carriers supported by the terminal device.

In some embodiments, the multi-beamforming capability may further include a polarization mode corresponding to a beam with an independent beamforming supported by the terminal device. After receiving the polarization mode corresponding to the beam with the independent beamforming supported by the terminal device, the network device may transmit a downlink beam to the terminal device based on the polarization mode corresponding to the beam with the independent beamforming supported by the terminal device. For example, a downlink beam 1 corresponds to a horizontal polarization, and a downlink beam 2 corresponds to a vertical polarization. A first base station may transmit a horizontally polarized beam 1 to the terminal device, and indicates a second base station to transmit a vertical polarized beam 2.

In some embodiments, the multi-carrier communication capability information may include a capability of the maximum difference in a power spectral density between carriers supported by the terminal device. For example, the power spectral density may be a ratio of a power of a downlink carrier transmitted by the base station to a band width configured to receive the downlink carrier by the terminal device.

For example, the terminal device reports that the capability of the maximum difference in the power spectral density between the carrier 1 and the carrier 2 which are supported by the terminal device is 2dB, the capability of the maximum difference in the power spectral density between the carrier 2 and the carrier 3 is 3dB, and the capability of the maximum difference in the power spectral density between the carrier 1 and the carrier 3 is 4dB.

In some embodiments, the capability of the maximum difference in the power spectral density between the carriers may be carried by a RRC signaling.

In some embodiments, the method may further include sending, by the terminal device, information of a difference in the power spectral density between the carriers. The information of the difference in the power spectral density between the carriers may include the difference in the power spectral density between the carriers which may specifically be presented as a difference value. When measuring multiple carriers, the terminal device may transmit the information of the difference in the power spectral density between each two carriers, or transmit difference information including the maximum difference value in the information of the difference in the power spectral density among all carriers.

In some embodiments, the terminal device sending the information of the difference in the power spectral density between the carriers may include at least one of the following manners.

Manner 1, the terminal device may perform a periodical measurement based on a network configuration, and report a measuring result. The measuring result may include the information of the difference in the power spectral density between the carriers of at least one frequency band supported by the terminal device.

For example, the measuring result may include the information of the difference in the power spectral density between the carrier 1 and the carrier 2 in the frequency band n which is supported by the terminal device.

For another example, the measuring result may include the information of the difference in the power spectral density between the carrier 1 in the frequency band n259 supported by the terminal device and the carrier 2 in the frequency band n260 supported by the terminal device. The frequency band n259 and the frequency band n260 belong to the frequency band combination.

For a further example, the terminal device may support the carrier 1 in the frequency band n259, the carrier 2 in the frequency band n260, and the carrier 3 in the frequency band n261. The measuring result may include the information of the difference in the power spectral density between the carrier 1 and the carrier 2, the information of the difference in the power spectral density between the carrier 2 and the carrier 3, and the information of the difference in the power spectral density between the carrier 1 and the carrier 3.

For a yet example, the terminal device may support the carrier 1 in the frequency band n259, the carrier 2 in the frequency band n260, and the carrier 3 in the frequency band n261. When a value of the difference in the power spectral density between the carrier 1 and the carrier 3 is the maximum, the measuring result may include the information of the difference in the power spectral density between the carrier 1 and the carrier 2.

Manner 2, the terminal may report the information of the difference in the power spectral density between the carriers based on a triggering event.

In some embodiments, the triggering event may include at least one of the following.

A difference value in the information of the difference in the power spectral density between the carriers is greater than a first threshold.

For example, the first threshold is 2dB. The difference value measured by the terminal device between the carrier! and the carrier 2 is 4dB. The difference value measured by the terminal device between the carrier 2 and the carrier 3 is 1dB. The terminal is triggered to report the difference value between the carrier 1 and the carrier 2.

A difference between a measured-currently difference value in the information of the difference in the power spectral density between the carriers and a difference value reported last time being is than a second threshold.

For example, the second threshold is 2dB. The measured-currently difference value between the carrier 1 and the carrier 2 is 4dB. The difference value between the carrier 1 and the carrier 2 reported last time is 1dB. The difference between the measured-currently difference value between the carrier 1 and the carrier 2 and the difference value between the carrier 1 and the carrier 2 reported last time is 3dB. The terminal is triggered to report the difference value between the carrier 1 and the carrier 2.

FIG. 7 is a schematic flowchart of the multi-carrier communication method 300 according to a second embodiment of the present disclosure. The method may be applied to the system as shown in FIG. 1, but is not limited thereto. The method may include at least part of the following contents.

At block 310, sending, by the terminal device, a request for adjusting the multi-carrier communication configuration to the network device, the request for adjusting the multi-carrier communication configuration being configured to request the network device to adjust the multi-carrier communication configuration of the terminal device. In the present embodiment, the terminal per se may determine whether the multi-carrier communication configuration is required to be adjusted. When the multi-carrier communication configuration is required to be adjusted, the terminal device may send the request for adjusting the multi-carrier communication configuration to the network device. Specifically, the terminal device may determine whether the multi-carrier communication configuration is required to be adjusted based on the capability of the maximum difference in the power spectral density between the carriers of the terminal device and the information of the difference in the power spectral density between the carriers measured by the terminal device. The terminal device may determine whether the multi-carrier communication configuration is required to be adjusted based on a magnitude of the difference value in the information of difference in the power spectral density between the carriers measured by the terminal device.

In some embodiments, the method may include the terminal device measuring and obtaining the information of the difference in the power spectral density between the carriers, which is supported by the terminal device.

In some embodiments, the terminal device sending the request for adjusting the multi-carrier communication configuration to the network device may include the terminal device sending the request for adjusting the multi-carrier communication configuration to the network device base on the capability of the maximum difference in the power spectral density between the carriers of the terminal device and the information of the difference in the power spectral density between the carriers measured by the terminal device. For example, the capability of the maximum difference in the power spectral density between the carriers of the terminal device is 10dB. The difference value in the information of the difference in the power spectral density between the carriers measured by the terminal device is 9Db, which is about to exceed the capability (In some embodiments, it may be determined by a threshold, such as 2dB. The difference value which is 2dB or more less than the capability may be determined to be about to exceed the capability). In this case, the terminal device may send the request for adjusting the multi-carrier communication configuration to the network device.

In some embodiments, the terminal device sending the request for adjusting the multi-carrier communication configuration to the network device may include the terminal device sending the request for adjusting the multi-carrier communication configuration to the network device in response to the difference value in the information of the difference in the power spectral density between the carriers measured by the terminal device being greater than a third threshold. For example, the third threshold is 5dB, when measuring the difference value in the information of the difference in the power spectral density between the carriers is 6dB, the terminal device may send the request for adjusting the multi-carrier communication configuration to the network device.

In some embodiments, the request for adjusting the multi-carrier communication configuration is configured to request the network device to reduce the difference in the power spectral density between the carriers of the terminal device. In some embodiments, the network device may adjust powers and/or power spectral densities among the carriers of the terminal device to reduce the difference in the power spectral density between the downlink carriers of the terminal device. For example, the difference in the power spectral density between a downlink carrier 1 and a downlink carrier 2 is greater than the third threshold such as 6dB, a transmitting power of the downlink carrier 1 may be reduced and a transmitting power of the downlink carrier 2 may be increased. Or, the power spectral density of the of the downlink carrier 1 may be reduced and the power spectral density of the downlink carrier 2 may be increased. In some embodiments, the power spectral density of the carrier may be reduced by reducing the transmitting power of the carrier and/or increasing the band width of the terminal device configured to receive the carrier. The power spectral density of the carrier may be increased by increasing the transmitting power of the carrier and/or reducing the band width of the terminal device configured to receive the carrier.

For specific examples of the terminal device executing the method 300 in the present embodiment, references may be made to related descriptions of the terminal device in the above method 200, which are not repeated here for brevity.

FIG. 8 is a schematic flowchart of the multi-carrier communication method 400 according to a third embodiment of the present disclosure. The method may be applied to the system as shown in FIG. 1, but is not limited thereto. The method may include at least part of the following contents.

At block 410, receiving, by the network device, the multi-carrier communication capability information from the terminal device.

At block 420, performing, by the network device, the multi-carrier communication configuration for the terminal device based on the multi-carrier communication capability information.

In some embodiments, the multi-carrier communication capability information may include the multi-beamforming capability.

In some embodiments, the multi-beamforming capability may include whether the terminal device supports multiple independent beamforming capabilities.

In some embodiments, an operation of the network device performing the multi-carrier communication configuration for the terminal device based on the multi-carrier communication capability information may include a first network device configuring the terminal device to perform the multi-carrier communication in response to the terminal device supporting the multiple independent beamforming capabilities.

In some embodiments, an operation of the first network device configuring the terminal device to perform the multi-carrier communication in response to the terminal device supporting the multiple independent beamforming capabilities may include at least one of the following.

The first network device configures the terminal device to perform the multi-carrier communication in the frequency band in response to the terminal device supporting the multiple independent beamforming capabilities in the frequency band.

The first network device configures the terminal device to perform a multi-carrier communication in the frequency band group in response to the terminal device supporting the multiple independent beamforming capabilities in the frequency band group.

The first network device configures the terminal device to perform the multi-carrier communication in the frequency band combination in response to the terminal device supporting the multiple independent beamforming capabilities in the frequency band combination.

The first network device configures the terminal device to perform the multi-carrier communication in the combination of the frequency band groups in response to the terminal device supporting the multiple independent beamforming capabilities in the combination of the frequency band groups.

In some embodiments, the first network device may include the single base station cell, the multiple base station cells sharing the common site, or multiple base station cells not sharing the common site.

In some embodiments, the operation of the network device performing the multi-carrier communication configuration for the terminal device based on the multi-carrier communication capability information may include a second network device configuring the terminal device to perform the multi-carrier communication in response to the terminal device not supporting the multiple independent beamforming capabilities.

In some embodiments, an operation of the second network device configuring the terminal device to perform the multi-carrier communication in response to the terminal device supporting the multiple independent beamforming capabilities, may include at least one of the following.

The second network device configures the terminal device to perform the multi-carrier communication in the frequency band in response to the terminal device not supporting the multiple independent beamforming capabilities in the frequency band.

The second network device configures the terminal device to perform the multi-carrier communication in the frequency band group in response to the terminal device not supporting the multiple independent beamforming capabilities in the frequency band group;

The second network device configures the terminal device to perform the multi-carrier communication in the frequency band combination in response to the terminal device not supporting the multiple independent beamforming capabilities in the frequency band combination.

The second network device configures the terminal device to perform the multi-carrier communication in the combination of the frequency band groups in response to the terminal device not supporting the multiple independent beamforming capabilities in the combination of the frequency band groups.

In some embodiments, the second network device may include the single base station cell or the multiple base station cells sharing the common site.

In some embodiments, the multi-beamforming capability may further include the number of the independent beamforming carriers supported by the terminal device.

In some embodiments, the operation of the network device performing the multi-carrier communication configuration for the terminal device based on the multi-carrier communication capability information, may include the network device configuring the number of carriers transmitted by the base stations not sharing the common site based on the number of the independent beamforming carriers supported by the terminal device.

In some embodiments, the multi-beamforming capability may further include the polarization mode corresponding to the beam with the independent beamforming supported by the terminal device.

In some embodiments, the operation of the network device performing the multi-carrier communication configuration for the terminal device based on the multi-carrier communication capability information, may include the network device transmitting the downlink beam to the terminal device based on the polarization mode corresponding to the beam with the independent beamforming supported by the terminal device.

In some embodiments, the multi-carrier communication capability information may include the capability of the maximum difference in the power spectral density between the carriers supported by the terminal device.

In some embodiments, the capability of the maximum difference in the power spectral density between the carriers may be carried by the RRC signaling.

In some embodiments, the method may further include the network device receiving the information of the difference in the power spectral density between the carriers from the terminal device.

In some embodiments, an operation of the network device receiving information of the difference in the power spectral density between the carriers from the terminal device may include the network device receiving the measuring result periodically measured and reported by the terminal device, the measuring result including the information of the difference in the power spectral density between the carriers of at the least one frequency band supported by the terminal device.

In some embodiments, the method may further include the network device sending adjusting information to the terminal device based on the capability of the maximum difference in the power spectral density between the carriers and the measuring result, the adjusting information being configured to adjust the powers and/or the power spectral densities among carriers of the terminal device.

In some embodiments, the adjusting information may be configured to reduce the difference in the power spectral density between the carriers of the terminal device.

For specific examples of the network device executing the method 400 in the present embodiment, references may be made to related descriptions of network devices such as the base stations not sharing the common site, in the above method 200 and the above method 300, which are not repeated here for brevity.

FIG. 9 is a schematic flowchart of a multi-carrier communication method 500 according to a fourth embodiment of the present disclosure. The method may be applied to the system as shown in FIG. 1, but is not limited thereto. The method may include at least part of the following contents.

At block S510, receiving, by the network device, the request for adjusting the multi-carrier communication configuration.

At block S520, adjusting, by the network device, the multi-carrier communication configuration of the terminal device based on the request for adjusting the multi-carrier communication configuration.

In some embodiments, the method may further include the network device sending the adjusting information to the terminal device based on the request for adjusting the multi-carrier communication configuration, the adjusting information being configured to adjust the powers and/or the power spectral densities among carriers of the terminal device.

In some embodiments, the adjusting information may be configured to reduce the difference in the power spectral density between the carriers of the terminal device.

For specific examples of the network device executing the method 500 in the present embodiment, references may be made to related descriptions of network devices such as the base stations not sharing the common site, in the above method 200, the above method 300, and the above method 400, which are not repeated here for brevity.

A multi-carrier communication method with the terminal device assisting is provided in the embodiments of the present disclosure and may be applied in the NR system. The terminal device may assist the base station to perform the multi-carrier configuration by reporting the multi-carrier communication capability information such as the multiple independent beamforming capabilities, the capability of the maximum difference in the power spectral density between the carriers which may be demodulated.

Example 1: the terminal device reports the multiple independent beamforming capabilities.

In the NR system, especially the millimeter-wave frequency band may be faced with a problem of multiple carriers being unable to operate simultaneously, which results from a failure of the base station configuring the carriers due to the terminal being limited to a capability of the antenna array forming a narrow beam.

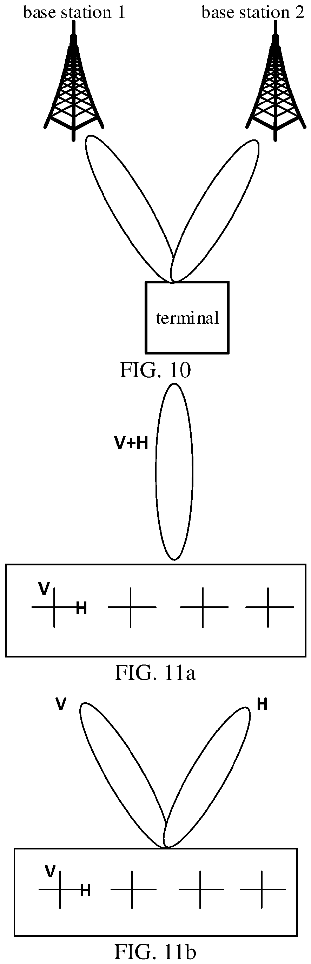

For example, a problem of the multi-carrier communication being performed between the terminal device and the multiple base stations not sharing the common site as shown in FIG. 10 may be analyzed. When the base station 1 and the base station 2 operate in the multi-carrier communication of a same millimeter-wave frequency band, a continuous multi-carrier communication or a discontinuous multi-carrier communication may be actually performed in the frequency band. The following capabilities of the terminal device may be divided based on the number of the antenna array of a millimeter-wave terminal device and the beamforming capability of the millimeter-wave terminal device.
(1) The terminal device includes an antenna array. FIG. 11a to FIG. 11c are schematic diagrams of beamforming capabilities of a terminal.

The terminal device may generate a narrow beam having a direction at the same moment, which includes the horizontal polarization (H) and the vertical polarization (V) as shown in FIG. 11a.

The terminal device may generate two narrow beams at the same moment, one of the two narrow beams having a first direction, and the other of the two narrow beams having a second direction different from the first direction. The one of the two beams corresponds to the H, and the other of the two narrow beams corresponds to the V, as shown in FIG. 11b.

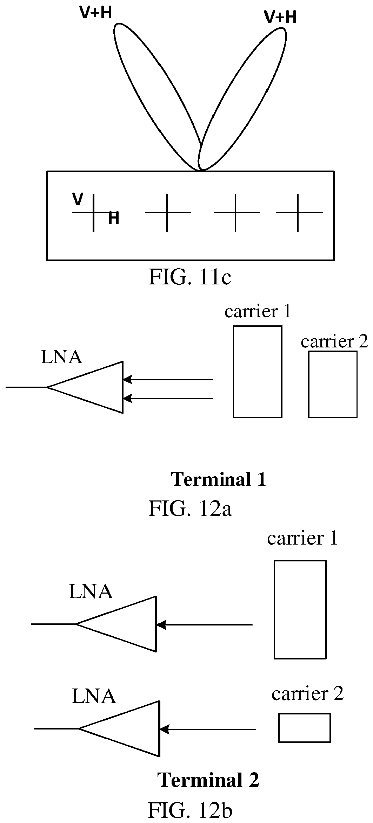

The terminal device may generate two narrow beams at the same moment, one of the two narrow beams having the first direction, and the other of the two narrow beams having the second direction different from the first direction. Each of the two beams includes the H and the V, as shown in FIG. 11c.

(2) The terminal device includes multiple antenna arrays.

The terminal device may generate multiple beams, and each beam has a direction different from the other beams.

The terminal device may simply generate beams having the same direction at the same moment.

When the base station 1 and the base station 2 communicated with the terminal device through different millimeter-wave carriers, the multi-carrier communication in the frequency band or the multi-carrier communication between multiple frequency bands may be performed. In this case, the terminal device may also be divided to have the capability of the terminal device similar to the multi-carrier communication in the frequency band based on the number of the antenna array of a millimeter-wave terminal device and the beamforming capability of the millimeter-wave terminal device.

However, for a terminal device, a capability of the terminal device supporting the multi-carrier communication in the frequency band may be not completely same with a capability of the terminal supporting the multi-carrier communication between the frequency band s. For example, the terminal device only including one antenna array may support multiple carriers having small frequency intervals communicating simultaneously. For another example, for the multi-carrier communication between the frequency bands, the terminal device only including the antenna array may not support the multiple carriers communicating between the frequency bands simultaneously due to frequency differences being over large.

The beamforming capability above is related to a specific terminal device. A capability of each different terminal device may be different. The capability of the terminal device is not known by the base station. Therefore, for some terminal devices, when the beam of one of the terminal devices is directed to a base station and keep a communication, the terminal device actually may not communicate with another base station, which may lead to a problem of the failure in the multi-carrier configuration.

To solve the problem, the terminal device may report the multiple independent beamforming capabilities to the base station by means of the RRC signaling when initially accessing a network, so as to assist the base station to perform operations such as a carrier configuration, beamforming of the downlink transmitting signal, and the like. In some embodiments, reporting manners may include the following.

A manner 1, for each millimeter-wave frequency band or the frequency band groups with similar frequencies (the frequency band n257, the frequency band n258, and the frequency band n261 in FIG. 4 may be regarded as the frequency band group), the terminal device reports the multiple independent beamforming capabilities which are supported by the terminal device. That is, the terminal device may generate multiple independent beams to be directed to the base stations in the same frequency band at different sites or the base stations in the same frequency band group at different sites, which may be applicable to the multi-carrier communication in the frequency band or the multi-carrier communication in the frequency band group.

The multiple independent beamforming capabilities may simply indicate whether the terminal device supports multiple independent beamforming capabilities, or may indicate the number of independent beamforming carriers which may be specifically supported by the terminal device.

A manner 2, for each millimeter-wave frequency band combination (such as the frequency band combination n257+n260 shown in FIG. 4), the terminal device reports the multiple independent beamforming capabilities which are supported by the terminal device. that is, the terminal device may generate the multiple independent beams to be directed to the base stations at different sites. Or, for the combination of millimeter-wave frequency band groups (as shown in FIG. 4, it may be considered that the frequency band n257, the frequency band n258, and the frequency band n261 are in the same frequency band group A and have similar beamforming capabilities, while the frequency band n260 and the frequency band n259 are in the frequency band group B and have similar beamforming capabilities. A+B is a combination of the frequency band groups), the terminal device reports the multiple independent beamforming capabilities which are supported by the terminal device, which may be applicable to the multi-carrier communication between the frequency bands.

The multiple independent beamforming capabilities may simply indicate whether the terminal device supports multiple independent beamforming capabilities, or may indicate the number of independent beamforming carriers which may be specifically supported by the terminal device.

When acquiring the multiple independent beamforming capabilities of the terminal device, the base station may perform operations as followed based on different scenarios.

A first scenario, the terminal device may be configured to perform the multi-carrier communication in the frequency band in the single base station cell, the multiple base station cells sharing the common site, and the multiple base station cells sharing the common site, in response to the terminal device supporting the multiple independent beamforming capabilities in the frequency band.

A second scenario, the terminal device may be configured to perform the multi-carrier communication between the frequency bands in the frequency band group in the single base station cell or the multiple base station cells sharing the common site, in response to the terminal device not supporting the multiple independent beamforming capabilities in the frequency band group.

A third scenario, the terminal device may be configured to perform the multi-carrier communication between the frequency bands in the frequency band group in the single base station cell or the multiple base station cells sharing the common site, in response to the terminal device not supporting the multiple independent beamforming capabilities in the frequency band.

A fourth scenario, the terminal device may be configured to perform the multi-carrier communication between the frequency bands in the frequency band group in the single base station cell, the multiple base station cells sharing the common site, and the multiple base station cells not sharing the common site, in response to the terminal device supporting the multiple independent beamforming capabilities in the frequency band group.

A fifth scenario, the terminal device may be configured to perform the multi-carrier communication between the frequency bands in the single base station cell or the multiple base station cells sharing the common site, in response to the terminal device not supporting the multiple independent beamforming capabilities in the frequency band combination or the multiple independent beamforming capabilities in the combination of the frequency band groups.

A sixth scenario, the terminal device may be configured to perform the multi-carrier communication between the frequency bands in the single base station cell, the multiple base station cells sharing the common site, and the multiple base station cells not sharing the common site, in response to the terminal device supporting the multiple independent beamforming capabilities in the frequency band combination or the multiple independent beamforming capabilities in the combination of the frequency band groups.

The base station may recognize a multi-carrier operating scenario supported by the terminal device by reporting the independent beamforming capability supported by the terminal device, such that a possibility of the problem of the failure in the multi-carrier configuration may be reduced.

Example 2, the terminal device reports a capability of the power spectral density between the carriers.

In the NR system, especially the millimeter-wave frequency band, due to a large difference between a transmitting loss of a first carrier and a transmitting loss of a second carrier, the difference between the power spectral density of a signal of the first carrier received by the terminal and the power spectral density of a signal the second carrier received by the terminal may be significantly large. Further, when the LNA inside the terminal device amplifies two receiving signals simultaneously, the stronger signal may interfere the weaker signal, such that the terminal device may not receive the weaker signal accurately and the failure of the multiple carriers operating simultaneously may be further caused.

Reasons of the above problem may include factors according to multiple aspects. A first factor is operating frequency differences among the carriers, that is, the larger the frequency differences, the more serious the problem. A second factor is a receiving capability of the terminal device, i.e., a difference in the power spectral density between demodulated signals which may be correctly received by the terminal device. The stronger the receiving capability, the larger the difference in the power spectral density between signals which may be accepted by the terminal device.

The difference in the power spectral density between the carriers received by the terminal device is related to an implementation of the terminal device. FIG. 12a and FIG. 12b are schematic diagrams of a capability of the maximum difference in a power spectral density between carriers which may be demodulated by the terminal. As shown in FIG. 12a and FIG. 12b, the terminal device may receive multiple (e.g., two) carriers by a set of antenna arrays or multiple sets (e.g., two sets) of independent antenna arrays and corresponding LNA. Generally, when having receiving links such as multiple antenna arrays and the corresponding LNA, and the like, the terminal device may receive independently different carriers. In this case, two receiving links may operate in different frequency points respectively, that is, one of the two receiving links may operate in a first frequency point and the other of the two receiving links operate may operate in a second frequency point different from the first frequency point. A certain suppression may exist between links, and the difference in the power spectral density which may be received by the terminal may be relatively larger. When the terminal device receives the two carriers by the same set of antenna arrays and the corresponding LNA, the difference in the power spectral density which may be received by the terminal may be relatively smaller.

The capability of the maximum difference in the power spectral density between the carriers which may be received and demodulated by the terminal device may be unknown to the base station. When the difference in the power spectral density between the multiple carriers configured by the base station is over large, the terminal device may not receive and demodulate the carriers. In the present embodiment, the terminal device may indicate the capability of the maximum difference in the power spectral density between the carriers which may be received and demodulated by the terminal to the base station. The capability may be indicated in the following ways.

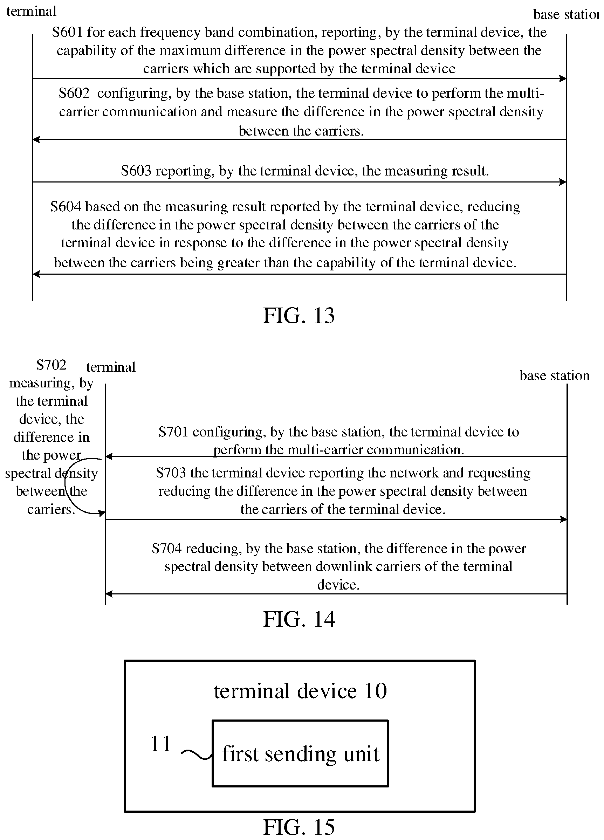

A first manner, for each the frequency band combination, the terminal device may report the capability of the maximum difference in the power spectral density between the carriers which may be supported by the terminal device. As shown in FIG. 13, the first manner may include the following operations.

At block S601, reporting, by the terminal device, the capability of the maximum difference in the power spectral density between the carriers which are supported by the terminal device to the network device such as the base station by means of the RRC signaling when initially accessing the network.

At block S602, configuring, by the network device, the terminal device to perform the periodically measuring and measure the difference in the power spectral density between the carriers.

At block S603, reporting, by the terminal device, the measuring result to feedback the information of the difference in the power spectral density between the carriers.

The terminal device is triggered based on an event to measure and feedback the information of the difference in the power spectral density between the carriers. Examples of triggering manners are the following.

When the difference value is greater than a certain threshold (e.g., 2dB), the terminal may report the difference value to the base station.

When the difference between the measured-currently difference value and the difference value reported last time is greater than a certain threshold (e.g., 2dB), the terminal may report the measured-currently difference value to the base station.

At block S604, based on the measuring result reported by the terminal device, reducing the difference in the power spectral density between the carriers of the terminal device in response to the difference in the power spectral density between the carriers being greater than the capability of the terminal device. After receiving the information of the difference in the power spectral density between the carriers, adjusting, by the base station, the powers between the carriers and corresponding power spectral densities. In this way, a possibility of a carrier receiving and demodulating problem of the terminal resulted from the difference in the power spectral density being over large may be reduced.

A second manner, the terminal device may indicate the network that the difference in the power spectral density between the carriers being over large, and request reducing the difference in the power spectral density between the carriers.

In the second manner, the terminal device may be not required to report the capability of the maximum difference in the power spectral density which may be supported by each frequency band combination of the terminal device. As shown in FIG. 14, the second manner may include the following operations.

At block S701, configuring, by the base station, the terminal device to perform the multi-carrier communication.

At block S702, measuring, by the terminal device, the difference in the power spectral density between the carriers.

At block S703, the terminal device reporting the network and requesting reducing the difference in the power spectral density between the carriers of the terminal device. Or, comparing, by the terminal device, a real-time measuring result with the capability of the maximum difference in the power spectral density which may be supported by the terminal device. In response to the measuring result being about to exceed the capability of the terminal, for example, a difference between the measuring result and the capability of the terminal being 2dB, the terminal device reporting the network and requesting reducing the difference in the power spectral density between the carriers of the terminal device.

At block S704, reducing, by the base station, the he difference in the power spectral density between the carriers of the terminal device after the base station receives the request.

In the embodiments of the present disclosure, the base station may be assisted to reduce a possibility of the problem of the failure in the multi-carrier communication resulting from the terminal device not supporting the multi-carrier independent beamforming or the difference in the power spectral density between the carriers being over large in the multi-carrier communication.

FIG. 15 is a schematic block diagram of a terminal device 10 according to a first embodiment of the present disclosure. The terminal device 10 may include a first sending unit 11.

The first sending unit 11 is configured to send the multi-carrier communication capability information to the network device, the multi-carrier communication capability information being configured to indicate the network device to perform the multi-carrier communication configuration for the terminal device.

In some embodiments, the multi-carrier communication capability information may include the multi-beamforming capability.

In some embodiments, the multi-beamforming capability may include whether the terminal device supports the multiple independent beamforming capabilities.

In some embodiments, whether the terminal device supports multiple independent beamforming capabilities, may include at least one of the following.

The terminal device supports the multiple independent beamforming capabilities in the frequency band.

The terminal device does not support the multiple independent beamforming capabilities in the frequency band.

The terminal device supports the multiple independent beamforming capabilities in the frequency band group.

The terminal device does not support the multiple independent beamforming capabilities in the frequency band group.

The terminal device supports the multiple independent beamforming capabilities in the frequency band combination.

The terminal device does not support the multiple independent beamforming capabilities in the frequency band combination.

The terminal device supports the multiple independent beamforming capabilities in the combination of frequency band groups.

The terminal device does not support the multiple independent beamforming capabilities in the combination of the frequency band groups.

In some embodiments, the multi-beamforming capability may further include the number of independent beamforming carriers supported by the terminal device.

In some embodiments, the multi-beamforming capability may further include the polarization mode corresponding to the beam with the independent beamforming supported by the terminal device.

In some embodiments, the multi-carrier communication capability information may include the capability of the maximum difference in the power spectral density between carriers supported by the terminal device.

In some embodiments, the capability of the maximum difference in the power spectral density between the carriers may be carried by the RRC signaling.

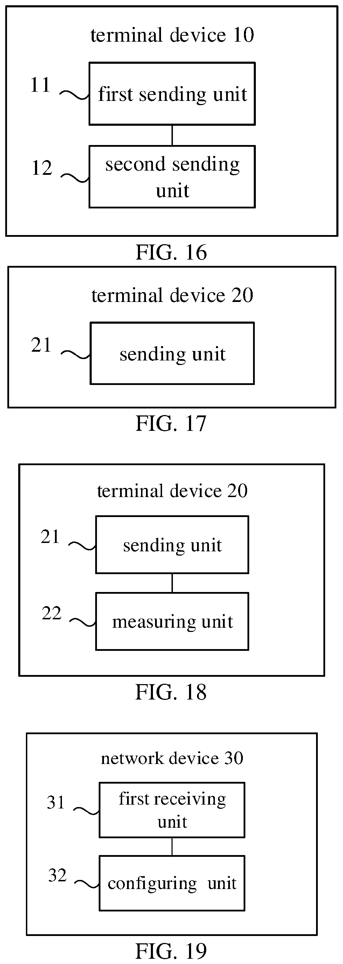

In some embodiments, as shown in FIG. 16, the terminal device may further include a second sending unit configured to send the information of the difference in the power spectral density between the carriers.

In some embodiments, the second sending unit may be configured to send the information of the difference in the power spectral density between the carriers in at least one the following way.

The second sending unit may perform a periodical measurement based on the network configuration, and report the measuring result. The measuring result includes the information of the difference in the power spectral density between the carriers of the at least one frequency band supported by the terminal device.

The second sending unit may report the information of the difference in the power spectral density between the carriers based on the triggering event.

In some embodiments, the triggering event may include at least one of the following.

The difference value in the information of the difference in the power spectral density between the carriers is greater than the first threshold.

The difference between the measured-currently difference value in the information of the difference in the power spectral density between the carriers and the difference value reported last time is greater than the second threshold.

The terminal device 10 in the present embodiment may implement corresponding functions of the terminal device in the embodiments of the method 200 described above. For processes, functions, implementations, and beneficial effects corresponding to each module (a sub-module, a unit or a component) of the terminal device 10, references may be made to corresponding descriptions in method embodiments described above, which are not be repeated.

It should be noted that described functions of each module (the sub-module, the unit or the component) of the terminal device 10 in the present embodiment may be implemented by different modules (sub-modules, units or components), or by a same module (the sub-module, the unit or the component).

FIG. 17 is a schematic block diagram of the terminal device 20 according to a third embodiment of the present disclosure. The terminal device 20 may include a sending unit 21.

The sending unit 21 is configured to send the request for adjusting the multi-carrier communication configuration to the network device, the request for adjusting the multi-carrier communication configuration being configured to request the network device to adjust the multi-carrier communication configuration of the terminal device.

In some embodiments, as shown in FIG. 18, the terminal device may further include a measuring unit configured to measure and obtain the information of the difference in the power spectral density between the carriers, which is supported by the terminal device.

In some embodiments, the sending unit may be specifically configured to send the request for adjusting the multi-carrier communication configuration to the network device base on the capability of the maximum difference in the power spectral density between carriers of the terminal device and the information of the difference in the power spectral density between the carriers measured by the terminal.

In some embodiments, the sending unit may be specifically configured to send the request for adjusting the multi-carrier communication configuration to the network device in response to the difference value in the information of the difference in the power spectral density between the carriers measured by the terminal device being greater than a third threshold.

In some embodiments, the request for adjusting the multi-carrier communication configuration may be configured to request the network device to reduce the difference in the power spectral density between the carriers of the terminal device.

The terminal device 20 in the present embodiment may implement corresponding functions of the terminal device in the embodiments of the method 300 described above. For processes, functions, implementations, and beneficial effects corresponding to each module (a sub-module, a unit or a component) of the terminal device 20, references may be made to corresponding descriptions in the method embodiments described above, which are not be repeated.

It should be noted that described functions of each module (the sub-module, the unit or the component) of the terminal device 20 in the present embodiment may be implemented by different modules (sub-modules, units or components), or by the same module (the sub-module, the unit or the component).

FIG. 19 is a schematic block diagram of a network device 30 according to a first embodiment of the present disclosure. The network device 30 may include a first receiving unit 31 and a configuring unit 32.

The first receiving unit 31 is configured to receive the multi-carrier communication capability information from the terminal device.

The configuring unit 32 is configured to perform the multi-carrier communication configuration for the terminal device based on the multi-carrier communication capability information.

In some embodiments, the multi-carrier communication capability information may include the multi-beamforming capability.

In some embodiments, the multi-beamforming capability may include whether the terminal device supports the multiple independent beamforming capabilities.

In some embodiments, an operation of the configuring unit 32 performing the multi-carrier communication configuration for the terminal device based on the multi-carrier communication capability information may include any one of a case 1 and a case 2.

Case 1, the configuring unit 32 may be specifically configured to configure the terminal device to perform the multi-carrier communication in response to the terminal device supporting the multiple independent beamforming capabilities.

In some embodiments, the case 1 may include any one of the following.

The configuring unit 32 may configure the terminal device to perform the multi-carrier communication in the frequency band in response to the terminal device supporting the multiple independent beamforming capabilities in the frequency band.

The configuring unit 32 may configure the terminal device to perform the multi-carrier communication in the frequency band group in response to the terminal device supporting the multiple independent beamforming capabilities in the frequency band group.

The configuring unit 32 may configure the terminal device to perform the multi-carrier communication in the frequency band combination in response to the terminal device supporting the multiple independent beamforming capabilities in the frequency band combination.

The configuring unit 32 may configure the terminal device to perform the multi-carrier communication in the combination of the frequency band groups in response to the terminal device supporting the multiple independent beamforming capabilities in the combination of frequency band groups.

In some embodiments, the configuring unit 32 may be arranged in the single base station cell, the multiple base station cells sharing the common site, or the multiple base station cells not sharing the common site.

Case 2, the configuring unit 32 may be specifically configured to configure the terminal device to perform the multi-carrier communication in response to the terminal device not supporting the multiple independent beamforming capabilities.

In some embodiments, the case 2 may include the following.

The configuring unit 32 may configure the terminal device to perform the multi-carrier communication in the frequency band in response to the terminal device not supporting the multiple independent beamforming capabilities in the frequency band.

The configuring unit 32 may configure the terminal device to perform the multi-carrier communication in the frequency band group in response to the terminal device not supporting the multiple independent beamforming capabilities in the frequency band group.

The configuring unit 32 may configure the terminal device to perform the multi-carrier communication in the frequency band combination in response to the terminal device not supporting the multiple independent beamforming capabilities in the frequency band combination.

The configuring unit 32 may configure the terminal device to perform the multi-carrier communication in the combination of frequency band groups in response to the terminal device not supporting the multiple independent beamforming capabilities in the combination of frequency band groups.

In some embodiments, the configuring unit 32 may be arranged in the single base station cell or the multiple base station cells sharing the common site.

In some embodiments, the multi-beamforming capability may further include the number of independent beamforming carriers supported by the terminal device.

In some embodiments, the configuring unit 32 may be further configured to configure the number of the carriers transmitted by the base stations not sharing the common site based on the number of the independent beamforming carriers supported by the terminal device.

In some embodiments, the multi-beamforming capability may further include the polarization mode corresponding to the beam with the independent beamforming supported by the terminal device.

In some embodiments, the configuring unit 32 may be further configured to transmit the downlink beam to the terminal device based on the polarization mode corresponding to the beam with the independent beamforming supported by the terminal device.

In some embodiments, the multi-carrier communication capability information may include the capability of the maximum difference in the power spectral density between the carriers supported by the terminal device.

In some embodiments, the capability of the maximum difference in the power spectral density between the carriers may be carried by the RRC signaling.

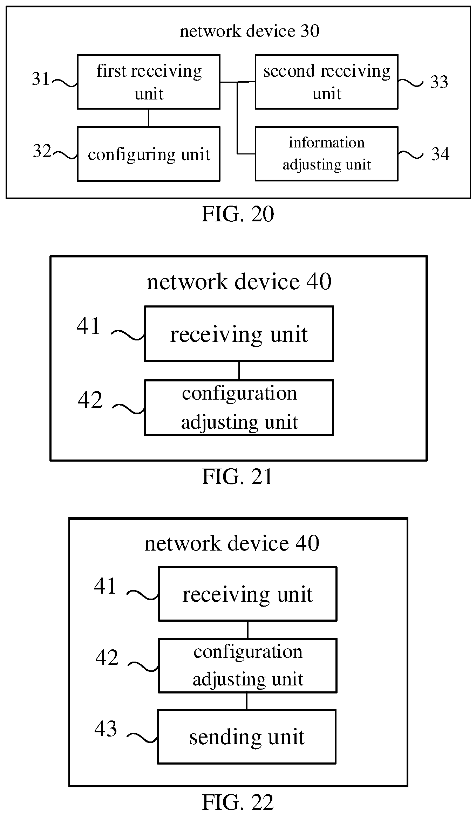

In some embodiments, as shown in FIG. 20, the network device 30 may include a second receiving unit 33.

The second receiving unit 33 is configured to receive the information of the difference in the power spectral density between the carriers from the terminal device.

In some embodiments, the second receiving unit 33 may be configured to receive the measuring result periodically measured and reported by the terminal device, the measuring result including the information of the difference in the power spectral density between the carriers of the at least one frequency bands supported by the terminal device.

In some embodiments, the network device 30 may further include an information adjusting unit 34. The information adjusting unit 34 is configured to send the adjusting information to the terminal device based on the capability of the maximum difference in the power spectral density between the carriers and the measuring result, the adjusting information being configured to adjust the powers and/or the power spectral densities among carriers of the terminal device.

In some embodiments, the adjusting information may be configured to reduce the difference in the power spectral density between the carriers of the terminal device.

The network device 30 in the present embodiment may implement the corresponding functions of the network device in the embodiments of the method 300 and the corresponding functions of the network device in the embodiments of the method 400 described above. For processes, functions, implementations, and beneficial effects corresponding to each module (a sub-module, a unit or a component) of the network device 30, references may be made to the corresponding descriptions in the method embodiments described above, which are not be repeated.

It should be noted that described functions of each module (the sub-module, the unit or the component) of the network device 30 in the present embodiment may be implemented by the different modules (sub-modules, units or components), or by the same module (the sub-module, the unit or the component).

FIG. 21 is a schematic block diagram of the network device 40 according to a third embodiment of the present disclosure. The network device 40 may further include a receiving unit 41 and a configuration adjusting unit 42.

The receiving unit 41 is configured to receive the request for adjusting the multi-carrier communication configuration.

The configuration adjusting unit 42 is configured to adjust the multi-carrier communication configuration of the terminal device based on the request for adjusting the multi-carrier communication configuration.

In some embodiments, as shown in FIG. 22, the network device 40 may include a sending unit 43.

The sending unit 43 is configured to send the adjusting information to the terminal device based on the request for adjusting the multi-carrier communication configuration, the adjusting information being configured to adjust the powers and/or the power spectral densities among the carriers of the terminal device.

In some embodiments, the adjusting information may be configured to reduce the difference in the power spectral density between the carriers of the terminal device.

The network device 40 in the the present embodiment may implement the corresponding functions of the network device in the embodiments of the method 300 and the corresponding functions of the network device in the embodiments of the method 500 described above. For processes, functions, implementations, and beneficial effects corresponding to each module (a sub-module, a unit or a component) of the network device 40, references may be made to the corresponding descriptions in the method embodiments described above, which are not be repeated.

It should be noted that described functions of each module (the sub-module, the unit or the component) of the network device 40 in the present embodiment may be implemented by the different modules (sub-modules, units or components), or by the same module (the sub-module, the unit or the component).

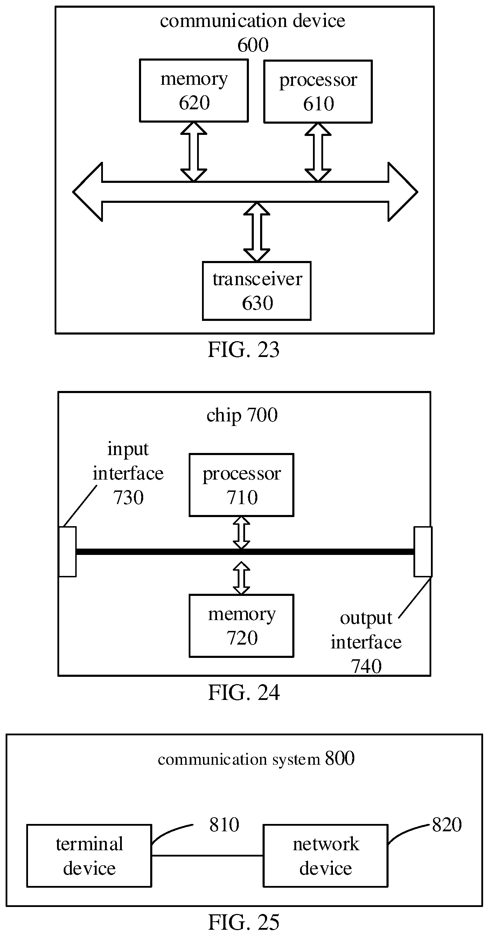

FIG. 23 is a schematic block diagram of a communication device 600 according to an embodiment of the present disclosure. The communication device 600 may include a processor 610. The processor 610 may be configured to call a computer program from a memory and run the computer program to implement the method according to the embodiments of the present disclosure.

In some embodiments, as shown in FIG. 23, the communication device 600 may further include the memory 620. The processor 610 may be configured to call the computer program from the memory 620 and run the computer program to implement the method according to the embodiments of the present disclosure.

In some embodiments, the memory 620 may be a separate device independent of the processor 610, or may be integrated in the processor 610.

In some embodiments, the communication device 600 may further include a transceiver 630. The processor 610 may be configured to control the transceiver 630 to communicate with other devices. Specifically, the processor 610 may be configured to control the transceiver 1030 to send information or data to other devices, or receive information or data sent by the other devices.

In some embodiments, the transceiver 630 may include a transmitter and a receiver. The transceiver 630 may further include antennas, and the number of the antennas may be one or more.

In some embodiments, the communication device 600 may be the network device in the embodiments of the present disclosure and may implement a corresponding process implemented by the network device in each method in the embodiments of the present disclosure, which is not repeated herein for concision.

In some embodiments, the communication device 600 may be the terminal device in the embodiments of the present disclosure and may implement a corresponding process implemented by the terminal device in each method of the embodiments of the present disclosure, which is not repeated herein for concision.

FIG. 24 is a schematic block diagram of a chip 700 according to some embodiments of the present disclosure. The chip 700 may include a processor 710. The processor 710 may call a computer program from a memory and run the computer program to implement the method in the embodiments of the present disclosure.

In some embodiments, as shown in FIG. 24, the chip 700 may further include the memory 720. The processor 710 may call the computer program from the memory 720 and un the computer program to implement the method in the embodiments of the present disclosure.

The memory 720 may be a separate device independent of the processor 710, or may be integrated in the processor 710.

In some embodiments, the chip 700 may further include an input interface 730. The processor 710 may control the input interface 730 to communicate with other devices or chips. Specifically, the processor 710 may control the input interface 730 to acquire information or data sent by other devices or chips.

In some embodiments, the chip 700 may further include an output interface 740. The processor 710 may be configured to control the output interface 740 to communicate with the other devices or chips. Specifically, the processor 710 may be configured to control the output interface 740 to output information or data to the other devices or chips.

In some embodiments, the chip may be applied to the network device in the embodiments of the present disclosure, and implement the corresponding process implemented by the network device in each method of the embodiments of the present disclosure, which is not repeated herein for concision.

In some embodiments, the chip may be applied to the terminal device in the embodiments of the present disclosure, and implement the corresponding process implemented by the terminal device in each method of the embodiments of the present disclosure, which is not repeated herein for concision.

It should be understood that the chip described in the embodiments of the present disclosure may also be referred to as a system-on-chip, a system chip, a chip system, or system-on-chip chip, or the like.

The processor described above may be a general-purpose processor, a digital signal processor (DSP), a field programmable gate array (FPGA), an application specific integrated circuit (ASIC) or other programmable logic devices, a transistor logic device, a discrete hardware component, etc. The general-purpose processor described above may be a microprocessor or any conventional processor, or the like.

The memory described above may be either a volatile memory or a non-volatile memory, or may include both the volatile memory and the non-volatile memory. The non-volatile memory may be a read-only memory (ROM), a programmable read-only memory (PROM), an erasable programmable read-only memory (EPROM), an electrically EPROM (EEPROM), or a flash memory. The volatile memory may be a random access memory (RAM).

It should be understood that above memories are exemplary but not limitative descriptions. For example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM), and so on. That is, the memory in the embodiments of the present disclosure may be intended to include but not limited to these and any other suitable types of memories.

FIG. 25 is a schematic block diagram of a communication system 800 according to some embodiments of the present disclosure. The communication system 800 may include a terminal device 810 and a network device 820.

In a case, the terminal device 810 may send the multi-carrier communication capability information to the network device 820, the multi-carrier communication capability information being configured to indicate the network device 820 to perform the multi-carrier communication configuration for the terminal device 810. The network device 820 may receive the multi-carrier communication capability information from the terminal device 810 and perform the multi-carrier communication configuration for the terminal device 810.

In another case, the terminal device 810 may send the request for adjusting the multi-carrier communication configuration to the network device 820. The request for adjusting the multi-carrier communication configuration is configured to request the network device to adjust the multi-carrier communication configuration of the terminal device. The network device 820 may receive the request for adjusting the multi-carrier communication configuration and adjust the multi-carrier communication configuration of the terminal device based on the request for adjusting the multi-carrier communication configuration.

In some embodiments, the terminal device 810 may be configured to implement the corresponding functions implemented by the terminal device in the method of each embodiment of the present disclosure, and the network device 820 may be configured to implement the corresponding functions implemented by the network device in the method of each embodiment of the present disclosure. A repeated description will not be made herein for concision.

In the above embodiments, it may be implemented in whole or in part by a software, a hardware, a firmware, or any combination thereof. When implemented by the software, it may be implemented in whole or in part in a form of a computer program product. The computer program product may include one or more computer indications. When the computer program indications are loaded and executed on a computer, all or part of the processes or functions described in the embodiments of the present disclosure may be generated. The computer may be a general purpose computer, a special purpose computer, a computer network, or other programmable devices. The computer indications may be stored in a computer readable storage medium, or be transmitted from the computer readable storage medium to another computer readable storage medium. For example, the computer indications may be transmitted from a website site, a computer, a server, or a data center by wire (e.g., a coaxial cable, an optical fiber, a Digital User Line (DSL)) or wireless (e.g., infrared, wireless, microwave, etc.) to another website site, another computer, another server, or another data center. The computer-readable storage medium may be any available medium that may be accessed by the computer, or a data storage device such as a server, a data center, etc. including one or more available media integrated. The available media may be magnetic media (e.g., floppy disks, hard disks, magnetic tapes), optical media (e.g., DVD), or semiconductor media (e.g., Solid State Disk (SSD)), and the like.

It should be understood that, in various embodiments of the present disclosure, a size of a sequence numbers of the above process does not mean an executing sequence. The executing sequence of each process should be determined based on its function and internal logic, and should be not understood as any limitation to an implementation process in the embodiments of the present disclosure.

Those skilled in the art may clearly understand that, for the convenience and brevity of description, a specific operating process of the above system, device, and unit may refer to a corresponding process in the above method embodiments, which will not be repeated herein.

A protection scope of the present disclosure is not limited to the above descriptions which are only specific embodiments of the present disclosure. Any change or substitution easily obtained by a person skilled in the art who is familiar with the present technical field should be covered within the protection scope of the present disclosure. Therefore, the protection scope of the present disclosure shall be subject to a protection scope of the claims.

## Claims

1. A multi-carrier communication method, comprising:
sending, by a terminal device, multi-carrier communication capability information to a network device, wherein the multi-carrier communication capability information is configured to indicate the network device to perform a multi-carrier communication configuration for the terminal device.

2. The method according to claim 1, wherein the multi-carrier communication capability information comprises a multi-beamforming capability.

3. The method according to claim 2, wherein the multi-beamforming capability comprises whether the terminal device supports a plurality of independent beamforming capabilities.

4. The method according to claim 3, wherein the whether the terminal device supports a plurality of independent beamforming capabilities, comprises at least one of:
the terminal device supporting a plurality of independent beamforming capabilities in a frequency band;
the terminal device not supporting the plurality of independent beamforming capabilities in the frequency band;
the terminal device supporting a plurality of independent beamforming capabilities in a frequency band group;
the terminal device not supporting the plurality of independent beamforming capabilities in the frequency band group;
the terminal device supporting a plurality of independent beamforming capabilities in a frequency band combination;
the terminal device not supporting the plurality of independent beamforming capabilities in the frequency band combination;
the terminal device supporting a plurality of independent beamforming capabilities in a combination of frequency band groups; and
the terminal device not supporting the plurality of independent beamforming capabilities in the combination of the frequency band groups.

5. The method according to any one of claims 2 to 4, wherein the multi-beamforming capability further comprises the number of independent beamforming carriers supported by the terminal device.

6. The method according to any one of claims 2 to 5, wherein the multi-beamforming capability further comprises a polarization mode corresponding to a beam with an independent beamforming supported by the terminal device.

7. The method according to any one of claims 1 to 6, wherein the multi-carrier communication capability information comprises a capability of the maximum difference in a power spectral density between carriers supported by the terminal device.

8. The method according to claim 7, wherein the capability of the maximum difference in the power spectral density between the carriers is carried by a RRC signaling.

9. The method according to claim 7 or 8, further comprising:
sending, by the terminal device, information of a difference in the power spectral density between the carriers.

10. The method according to claim 9, wherein the sending, by the terminal device, information of a difference in the power spectral density between the carriers, comprises at least one of:
the terminal device performing a periodical measurement based on a network configuration, and reporting a measuring result, wherein the measuring result comprises the information of the difference in the power spectral density between the carriers of at least one frequency band supported by the terminal device; and
reporting the information of the difference in the power spectral density between the carriers based on a triggering event.

11. The method according to claim 10, wherein the triggering event comprises at least one of:
a difference value in the information of the difference in the power spectral density between the carriers being greater than a first threshold; and
a difference between a measured-currently difference value in the information of the difference in the power spectral density between the carriers and a difference value reported last time being greater than a second threshold.

12. A multi-carrier communication method, comprising:
sending, by a terminal device, a request for adjusting a multi-carrier communication configuration to a network device, wherein the request for adjusting the multi-carrier communication configuration is configured to request the network device to adjust the multi-carrier communication configuration of the terminal device.

13. The method according to claim 12, further comprising:
measuring and obtaining, by the terminal device, information of a difference in a power spectral density between the carriers, which is supported by the terminal device.

14. The method according to claim 13, wherein the sending, by a terminal device, a request for adjusting a multi-carrier communication configuration to a network device, comprises:
sending, by the terminal device, the request for adjusting the multi-carrier communication configuration to the network device base on a capability of the maximum difference in the power spectral density between carriers of the terminal device and the information of the difference in the power spectral density between the carriers measured by the terminal.

15. The method according to claim 13, wherein the sending, by a terminal device, a request for adjusting a multi-carrier communication configuration to a network device, comprises:
sending, by the terminal device, the request for adjusting the multi-carrier communication configuration to the network device in response to a difference value in the information of the difference in the power spectral density between the carriers measured by the terminal device being greater than a third threshold.

16. The method according to any one of claims 12 to 15, wherein the request for adjusting the multi-carrier communication configuration is configured to request the network device to reduce the difference in the power spectral density between the carriers of the terminal device.

17. A multi-carrier communication method, comprising:
receiving, by a network device, multi-carrier communication capability information from a terminal device; and
performing a multi-carrier communication configuration for the terminal device based on the multi-carrier communication capability information.

18. The method according to claim 17, wherein the multi-carrier communication capability information comprises a multi-beamforming capability.

19. The method according to claim 18, wherein the multi-beamforming capability comprises whether the terminal device supports a plurality of independent beamforming capabilities.

20. The method according to claim 19, wherein the performing a multi-carrier communication configuration for the terminal device based on the multi-carrier communication capability information, comprises:
configuring, by a first network device, the terminal device to perform a multi-carrier communication in response to the terminal device supporting the plurality of independent beamforming capabilities.

21. The method according to claim 20, wherein the configuring, by a first network device, the terminal device to perform a multi-carrier communication in response to the terminal device supporting the plurality of independent beamforming capabilities, comprises at least one of:
configuring, by the first network device, the terminal device to perform a multi-carrier communication in a frequency band in response to the terminal device supporting a plurality of independent beamforming capabilities in the frequency band;
configuring, by the first network device, the terminal device to perform a multi-carrier communication in a frequency band group in response to the terminal device supporting a plurality of independent beamforming capabilities in the frequency band group;
configuring, by the first network device, the terminal device to perform a multi-carrier communication in a frequency band combination in response to the terminal device supporting a plurality of independent beamforming capabilities in the frequency band combination; and
configuring, by the first network device, the terminal device to perform a multi-carrier communication in a combination of frequency band groups in response to the terminal device supporting a plurality of independent beamforming capabilities in the combination of frequency band groups.

22. The method according to claim 20 or 21, wherein the first network device comprises a single base station cell, a plurality of base station cells sharing a common site, or a plurality of base station cells not sharing the common site.

23. The method according to claim 19, wherein the performing a multi-carrier communication configuration for the terminal device based on the multi-carrier communication capability information, comprises:
configuring, by a second network device, the terminal device to perform a multi-carrier communication in response to the terminal device not supporting the plurality of independent beamforming capabilities.

24. The method according to claim 23, wherein the configuring, by a second network device, the terminal device to perform a multi-carrier communication in response to the terminal device supporting the plurality of independent beamforming capabilities, comprises at least one of:
configuring, by the second network device, the terminal device to perform a multi-carrier communication in a frequency band in response to the terminal device not supporting a plurality of independent beamforming capabilities in the frequency band;
configuring, by the second network device, the terminal device to perform a multi-carrier communication in a frequency band group in response to the terminal device not supporting a plurality of independent beamforming capabilities in the frequency band group;
configuring, by the second network device, the terminal device to perform a multi-carrier communication in a frequency band combination in response to the terminal device not supporting a plurality of independent beamforming capabilities in the frequency band combination; and
configuring, by the second network device, the terminal device to perform a multi-carrier communication in a combination of frequency band groups in response to the terminal device not supporting a plurality of independent beamforming capabilities in the combination of frequency band groups.

25. The method according to claim 23 or 24, wherein the second network device comprises a single base station cell or a plurality of base station cells sharing a common site.

26. The method according to any one of claims 18 to 25, wherein the multi-beamforming capability further comprises the number of independent beamforming carriers supported by the terminal device.

27. The method according to claim 26, wherein the performing a multi-carrier communication configuration for the terminal device based on the multi-carrier communication capability information, comprises:
configuring, by the network device, the number of carriers transmitted by base stations not sharing a common site based on the number of the independent beamforming carriers supported by the terminal device.

28. The method according to any one of claims 18 to 27, wherein the multi-beamforming capability further comprises a polarization mode corresponding to a beam with an independent beamforming supported by the terminal device.

29. The method according to claim 28, wherein the performing a multi-carrier communication configuration for the terminal device based on the multi-carrier communication capability information, comprises:
transmitting, by the network device, a downlink beam to the terminal device based on the polarization mode corresponding to the beam with the independent beamforming supported by the terminal device.

30. The method according to any one of claims 17 to 29, wherein the multi-carrier communication capability information comprises a capability of the maximum difference in a power spectral density between carriers supported by the terminal device.

31. The method according to claim 30, wherein the capability of the maximum difference in the power spectral density between the carriers is carried by a RRC signaling.

32. The method according to claim 30 or 31, further comprising:
receiving, by the network device, information of a difference in the power spectral density between the carriers from the terminal device.

33. The method according to claim 32, wherein the receiving, by the network device, information of a difference in the power spectral density between the carriers from the terminal device, comprises:
receiving, by the network device, a measuring result periodically measured and reported by the terminal device, wherein the measuring result comprises the information of the difference in the power spectral density between the carriers of at least one frequency band supported by the terminal device.

34. The method according to claim 33, further comprising:
sending, by the network device, adjusting information to the terminal device based on the capability of the maximum difference in the power spectral density between the carriers and the measuring result, wherein the adjusting information is configured to adjust powers and/or power spectral densities among carriers of the terminal device.

35. The method according to claim 34, wherein the adjusting information is configured to reduce the difference in the power spectral density between the carriers of the terminal device.

36. A multi-carrier communication method, comprising:
receiving, by a network device, a request for adjusting a multi-carrier communication configuration; and
adjusting, by a network device, the multi-carrier communication configuration of the terminal device based on the request for adjusting the multi-carrier communication configuration.

37. The method according to claim 36, further comprising:
sending, by the network device, adjusting information to the terminal device based on the request for adjusting the multi-carrier communication configuration, wherein the adjusting information is configured to adjust powers and/or power spectral densities among carriers of the terminal device.

38. The method according to claim 37, wherein the adjusting information is configured to reduce the difference in the power spectral density between the carriers of the terminal device.

39. A terminal device, comprising:
a first sending unit, configured to send multi-carrier communication capability information to a network device, wherein the multi-carrier communication capability information is configured to indicate the network device to perform a multi-carrier communication configuration for the terminal device.

40. The terminal device according to claim 39, wherein the multi-carrier communication capability information comprises a multi-beamforming capability.

41. The terminal device according to claim 40, wherein the multi-beamforming capability comprises whether the terminal device supports a plurality of independent beamforming capabilities.

42. The terminal device according to claim 41, wherein the whether the terminal device supports a plurality of independent beamforming capabilities, comprises at least one of:
the terminal device supporting a plurality of independent beamforming capabilities in a frequency band;
the terminal device not supporting the plurality of independent beamforming capabilities in the frequency band;
the terminal device supporting a plurality of independent beamforming capabilities in a frequency band group;
the terminal device not supporting the plurality of independent beamforming capabilities in the frequency band group;
the terminal device supporting a plurality of independent beamforming capabilities in a frequency band combination;
the terminal device not supporting the plurality of independent beamforming capabilities in the frequency band combination;
the terminal device supporting a plurality of independent beamforming capabilities in a combination of frequency band groups; and
the terminal device not supporting the plurality of independent beamforming capabilities in the combination of the frequency band groups.

43. The terminal device according to any one of claims 40 to 42, wherein the multi-beamforming capability further comprises the number of independent beamforming carriers supported by the terminal device.

44. The terminal device according to any one of claims 40 to 43, wherein the multi-beamforming capability further comprises a polarization mode corresponding to a beam with an independent beamforming supported by the terminal device.

45. The terminal device according to any one of claims 39 to 44, wherein the multi-carrier communication capability information comprises a capability of the maximum difference in a power spectral density between carriers supported by the terminal device.

46. The terminal device according to claim 45, wherein the capability of the maximum difference in the power spectral density between the carriers is carried by a RRC signaling.

47. The terminal device according to claim 45 or 46, further comprising:
a second sending unit, configured to send information of a difference in the power spectral density between the carriers.

48. The terminal device according to claim 47, wherein the second sending unit is configured to send the information of the difference in the power spectral density between the carriers in at least one way of:
performing a periodical measurement based on a network configuration, and reporting a measuring result, wherein the measuring result comprises the information of the difference in the power spectral density between the carriers of at least one frequency band supported by the terminal device; and
reporting the information of the difference in the power spectral density between the carriers based on a triggering event.

49. The terminal device according to claim 48, wherein the triggering event comprises at least one of:
a difference value in the information of the difference in the power spectral density between the carriers being greater than a first threshold; and
a difference between a measured-currently difference value in the information of the difference in the power spectral density between the carriers and a difference value reported last time being greater than a second threshold.

50. A terminal device, comprising:
a sending unit, configured to send a request for adjusting a multi-carrier communication configuration to a network device, wherein the request for adjusting the multi-carrier communication configuration is configured to request the network device to adjust the multi-carrier communication configuration of the terminal device.

51. The terminal device according to claim 50, further comprises:
a measuring unit, configured to measure and obtain information of a difference in a power spectral density between the carriers, which is supported by the terminal device.

52. The terminal device according to claim 51, wherein the sending unit is specifically configured to send the request for adjusting the multi-carrier communication configuration to the network device base on a capability of the maximum difference in the power spectral density between carriers of the terminal device and the information of the difference in the power spectral density between the carriers measured by the terminal.

53. The terminal device according to claim 51, wherein the sending unit is specifically configured to send the request for adjusting the multi-carrier communication configuration to the network device in response to a difference value in the information of the difference in the power spectral density between the carriers measured by the terminal device being greater than a third threshold.

54. The terminal device according to any one of claims 50 to 53, wherein the request for adjusting the multi-carrier communication configuration is configured to request the network device to reduce the difference in the power spectral density between the carriers of the terminal device.

55. A network device, comprising:
a first receiving unit, configured to receive multi-carrier communication capability information from a terminal device; and
a configuring unit, configured to perform a multi-carrier communication configuration for the terminal device based on the multi-carrier communication capability information.

56. The network device according to claim 55, wherein the multi-carrier communication capability information comprises a multi-beamforming capability.

57. The network device according to claim 56, wherein the multi-beamforming capability comprises whether the terminal device supports a plurality of independent beamforming capabilities.

58. The network device according to claim 57, wherein the configuring unit is configured to configure the terminal device to perform a multi-carrier communication in response to the terminal device supporting the plurality of independent beamforming capabilities.

59. The network device according to claim 58, wherein a first network device configuring the terminal device to perform a multi-carrier communication in response to the terminal device supporting the plurality of independent beamforming capabilities, comprises at least one of:
configuring, by the first network device, the terminal device to perform a multi-carrier communication in a frequency band in response to the terminal device supporting a plurality of independent beamforming capabilities in the frequency band;
configuring the terminal device to perform a multi-carrier communication in a frequency band group in response to the terminal device supporting a plurality of independent beamforming capabilities in the frequency band group;
configuring the terminal device to perform a multi-carrier communication in a frequency band combination in response to the terminal device supporting a plurality of independent beamforming capabilities in the frequency band combination; and
configuring the terminal device to perform a multi-carrier communication in a combination of frequency band groups in response to the terminal device supporting a plurality of independent beamforming capabilities in the combination of frequency band groups.

60. The network device according to claim 58 or 59, wherein the configuring unit is arranged in a single base station cell, a plurality of base station cells sharing a common site, or a plurality of base station cells not sharing the common site.

61. The network device according to claim 57, wherein the configuring unit is configured to configure the terminal device to perform a multi-carrier communication in response to the terminal device not supporting the plurality of independent beamforming capabilities.

62. The network device according to claim 61, wherein the configuring unit being configured to configure the terminal device to perform a multi-carrier communication in response to the terminal device not supporting the plurality of independent beamforming capabilities, comprises at least one of:
configuring the terminal device to perform a multi-carrier communication in a frequency band in response to the terminal device not supporting a plurality of independent beamforming capabilities in the frequency band;
configuring the terminal device to perform a multi-carrier communication in a frequency band group in response to the terminal device not supporting a plurality of independent beamforming capabilities in the frequency band group;
configuring the terminal device to perform a multi-carrier communication in a frequency band combination in response to the terminal device not supporting a plurality of independent beamforming capabilities in the frequency band combination; and
configuring the terminal device to perform a multi-carrier communication in a combination of frequency band groups in response to the terminal device not supporting a plurality of independent beamforming capabilities in the combination of frequency band groups.

63. The network device according to claim 61 or 62, wherein the configuring unit is arranged in a single base station cell or a plurality of base station cells sharing a common site.

64. The network device according to any one of claims 56 to 63, wherein the multi-beamforming capability further comprises the number of independent beamforming carriers supported by the terminal device.

65. The network device according to claim 64, wherein the configuring unit is further configured to configure the number of carriers transmitted by base stations not sharing a common site based on the number of the independent beamforming carriers supported by the terminal device.

66. The network device according to any one of claims 56 to 65, wherein the multi-beamforming capability further comprises a polarization mode corresponding to a beam with an independent beamforming supported by the terminal device.

67. The network device according to claim 66, wherein the configuring unit is further configured to transmit a downlink beam to the terminal device based on the polarization mode corresponding to the beam with the independent beamforming supported by the terminal device.

68. The network device according to any one of claims 55 to 67, wherein the multi-carrier communication capability information comprises a capability of the maximum difference in a power spectral density between carriers supported by the terminal device.

69. The network device according to claim 68, wherein the capability of the maximum difference in the power spectral density between the carriers is carried by a RRC signaling.

70. The network device according to claim 68 or 69, further comprising:
a second receiving unit, configured to receive information of a difference in the power spectral density between the carriers from the terminal device.

71. The network device according to claim 70, wherein the second receiving unit is configured to receive a measuring result periodically measured and reported by the terminal device, wherein the measuring result comprises the information of the difference in the power spectral density between the carriers of at least one frequency band supported by the terminal device.

72. The network device according to claim 71, further comprising:
an information adjusting unit, configured to send adjusting information to the terminal device based on the capability of the maximum difference in the power spectral density between the carriers and the measuring result, wherein the adjusting information is configured to adjust powers and/or power spectral densities among carriers of the terminal device.

73. The network device according to claim 72, wherein the adjusting information is configured to reduce the difference in the power spectral density between the carriers of the terminal device.

74. A network device, comprising:
a receiving unit, configured to receive a request for adjusting a multi-carrier communication configuration; and
a configuration adjusting unit, configured to adjust the multi-carrier communication configuration of the terminal device based on the request for adjusting the multi-carrier communication configuration.

75. The network device according to claim 74, further comprising:
a sending unit, configured to send adjusting information to the terminal device based on the request for adjusting the multi-carrier communication configuration, wherein the adjusting information is configured to adjust powers and/or power spectral densities among carriers of the terminal device.

76. The network device according to claim 75, wherein the adjusting information is configured to reduce the difference in the power spectral density between the carriers of the terminal device.

77. A terminal device, comprising:
a processor; and
a memory, configured to store a computer program;
wherein the processor is configured to call and run the computer program stored in the memory, and implement the method according to any one of claims 1 to 16.

78. A network device, comprising:
a processor; and
a memory, configured to store a computer program;
wherein the processor is configured to call and run the computer program stored in the memory, and implement the method according to any one of claims 17 to 38.

79. A chip, comprising:
a processor, configured to call a computer program from a memory and run the computer program, such that a device installed with the chip implements the method according to any one of claims 1 to 16.

80. A chip, comprising:
a processor, configured to call a computer program from a memory and run the computer program, such that a device installed with the chip implements the method according to any one of claims 17 to 38.

81. A computer-readable storage medium, configured to store a computer program, wherein the computer program causes a computer to implement the method according to any one of claims 1 to 16.

82. A computer-readable storage medium, configured to store a computer program, wherein the computer program causes a computer to implement the method according to any one of claims 17 to 38.

83. A computer-program product, comprising computer-program indications, wherein the computer-program indications cause a computer to implement the method according to any one of claims 1 to 16.

84. A computer-program product, comprising computer-program indications, wherein the computer-program indications cause a computer to implement the method according to any one of claims 17 to 38.

85. A computer program, wherein the computer program causes a computer to implement the method according to any one of claims 1 to 16.

86. A computer program, wherein the computer program causes a computer to implement the method according to any one of claims 17 to 38.

87. A communication system, comprising:
a terminal device, configured to implement the method according to any one of claims 1 to 16; and
a network device, configured to implement the method according to any one of claims 17 to 38.
